# EUROPEAN PATENT SPECIFICATION

(11) **EP 2 770 944 B1**
(45) Date of publication and mention of the grant of the patent: **16.12.2015**
(21) Application number: 12799292.3
(22) Date of filing: 26.10.2012
(51) Int. Cl.: A61C 8/00

(54) **TRANSMUCOSAL DENTAL IMPLANT**
TRANSMUKOSALES ZAHNIMPLANTAT
IMPLANT DENTAIRE TRANSMUQUEUX

(30) Priority: 28.10.2011 IT CO20110051
(43) Date of publication of application: 03.09.2014
(73) Proprietor: Biotype Implant System S.R.L., 09124 Cagliari (IT)
(72) Inventor: CATTANEO, Alessandro, I-09124 Cagliari (IT); CARUSO, Gabriele, I-09124 Cagliari (IT)
(74) Representative: De Ros, Alberto
(86) International application number: PCT/IB2012/055903
(87) International publication number: WO 2013/061287

(56) References cited:
- WO-A1-2008/129512
- US-A- 5 989 026
- US-A1- 2003 104 337

## Description

### Field of the invention

The present invention relates to an endosseous dental implant for anchoring dental prostheses.

More in particular, the present invention relates to endosseous dental implants for anchoring dental prostheses such as artificial teeth, crowns, dental bridges, dentures, into the maxilla or mandible bone.

### Prior art

Endosseous dental implants have consistently become widespread in the field of dental prostheses. Dental implants have the peculiarity of simulating, from the structural viewpoint, the way in which a tooth of the dental arch is located in an individual's mouth.

A tooth is anchored to the mandible or maxilla bone by its root and protrudes from the mucosa that covers and towers over the bone.

In order to replicate this structure, known dental implants are generally formed by two parts, connected to each other.

A first part adapted to insert into the bone and a second part fixable to the first one, for example by a screw, so as to ensure a good fixing to the implant, and accordingly, to the prosthesis.

A second part, attached to the screw, generally called stump, which crosses the gum mucosa and protrudes therefrom.

Therefore, a dental prosthesis can be fixed to the stump, thus obtaining a stable solution for a long period of use.

Dental implants therefore need a solid structure of the maxilla or mandible bone to install therein.

The interface area between stump and screw is located between the outermost part of the bone and the innermost part of the gum mucosa.

Therefore, the organic residues that deposit on the dental prosthesis and around it partially infiltrate into the gum mucosa and then into small spaces found between stump and screw; moreover, other organic material too, may infiltrate in such small spaces.

Thereafter, the organic material may penetrate more in depth into the hole of the bone in which the screw is inserted.

The presence and build-up of such an organic material in the area between screw and stump, when known solutions are used, may give rise to inflammations and/or infections, very difficult to treat, which may even lead to considerable damage to the same bone.

In particular, the bone structure may be affected making the screw fixing to the bone less steady (and therefore the prosthesis less stable) and, at the most, the use of endosseous dental implants in the affected area no longer feasible. Such a phenomenon is known as local loss of bony tissue and may lead to a reduction of the bone.

Dental implants have been developed in response to such problems, in particular by Straumann company, which by means of a single piece anchor to the (mandible or maxilla) bone and protrude from the gingival mucosa; the dental prosthesis is then applied on the protruding part. The particular geometry of these implants is such that the dental prosthesis will have to end at a precise line in this part protruding from the mucosa: in use, therefore, the dental prosthesis should be flush with the gingiva and the implant partially anchored to the bone and partially covered by the same dental prosthesis. Such a solution has proven to be particularly disadvantageous since this line of the implant represents a fixed reference, with no degree of flexibility, in a movable system (the gingival mucosa and mandible or maxilla bone system). Therefore, after the application of an implant of this type, although made up to standard, in a physiological response to the operations undergone, the mucosa can lower below or rise beyond such a line with both aesthetic and functional drawbacks. Moreover, a dental implant must adjust to different biotypes, each having different anatomical features of the mucosa. In particular, the mucosa profile and its thickness may considerably vary from one subject to the other. In the case of a subject having a mucosa with a very irregular profile, the dental prosthesis fixed on a dental implant of the known ones will not perfectly adjust to the profile of the same mucosa. Likewise, for a subject with a very thick mucosa to which a dental implant is applied, the interface between support and stump may be into the mucosa. Such a condition may cause problems of dental prosthesis cementing.

### Summary of the invention

A general object of the present invention is to overcome the drawbacks of known solutions, in particular to prevent the occurrence of organic material build-up in the area between stump and screw, improving the connection of this interface area.

A second, more specific object of the present invention is to provide a dental implant which allows a stable and easy anchoring of dental prostheses, in particular in the case of two or more contiguous dental prostheses.

A third, more specific object of the present invention is to provide a transmucosal dental implant which allows a better adjustment of dental prostheses to the mucosa profile.

A fourth, more specific object of the present invention is to provide a transmucosal dental implant which has an improved connection of the interface area between stump and screw.

A fifth, more specific object of the present invention is to provide a transmucosal dental implant which reduces or eliminates the problems of dental prosthesis cementing to dental implants.

A sixth, more specific object of the present invention is to provide a transmucosal dental implant which can adjust to a mucosa of any thickness.

These and other objects are achieved by a transmucosal dental implant having the technical features described in the annexed claims, which form an integral part of the present description.

In general, a transmucosal dental implant according to the present invention comprises a support adapted to be partially inserted into the maxilla or mandible bone and an element fixed to said support and adapted to receive a dental prosthesis; the support has an elongated and typically symmetrical shape; in a first end area thereof, the support comprises a first part adapted to be fixed into the maxilla or mandible bone, and in a second end area thereof, a second part in the shape of a truncated cone, in contact with the element; the cross-section of the second part decreases in the direction of the element; the first part is adapted to be inserted into the maxilla or mandible bone; the second part is adapted to be at least partially placed in an oral mucosa; the second part is inclined by a second angle between 8° and 15° (obviously, the inclination of the second part refers to the side surface of the cone with respect to the axis of said support), in which moreover said support is in a single piece, by means of the latter features, points in the implant support where organic material may build up are advantageously avoided. The element fixed to the elongated shape support and adapted to receive a dental prosthesis typically is a stump but it may alternately be a dental coupling or a bar.

The implant may be single (i.e., with a single support and correspondingly, a single element/stump), if the prosthesis is adapted to replace a single tooth, or multiple (i.e. with a plurality, typically two, of supports and with a corresponding plurality of elements/stumps), if the prosthesis is adapted to replace a plurality of adjacent teeth.

More in particular, the inclination of the second part is more than 10°and less than 15°, preferably more than 10° and less than 12°, and more preferably more than 10° and less than 11°.

Such a inclination advantageously allows a slight conical coupling to be created between the prosthesis and the support; by a slight conical coupling dental prostheses can be installed in a simpler manner, which prostheses find support in the stump and in the second part of the support.

Moreover, such an inclination allows an effective use of transmucosal dental implants if there is a plurality thereof in adjacent positions, i.e. in the case of a single prosthesis for multiple teeth, as explained hereinafter.

The mandible or maxilla bone is not uniform, i.e. it has higher areas, lower areas and inclined areas and the axes of the natural roots of the teeth are not reciprocally parallel and vertical with respect to a common reference; thus, in the case of a dental prosthesis that has to replace multiple adjacent teeth, there is the problem of how to arrange the transmucosal dental implants in order to allow the introduction of the stumps into the corresponding holes of the dental prosthesis and a correct coupling between prosthesis and implant.

Such a problem may be partially solved by providing an inclination between the stump axis and the support axis.

However, such a problem is reduced due to the (quite large) inclination of the second part of the support (which is at the base of the stump); obviously, the inclination of the second part does not necessarily exclude the inclination of the stump axis.

Moreover, the presence and inclination of the second part allow the application of the transmucosal dental implant by preparation on completion, for promoting the maturation of the mucosa tissues in which the second part is. Such an application technique advantageously allows a margin of choice on the application depth of the implant in the bone and accordingly, of the second part in the mucosa, according to the biotype to which it is applied. Such a second part, thus configured, therefore ensures that the transmucosal dental implant remains applied as expected both from the aesthetic viewpoint and from the functional viewpoint, also after the physiological adjustment of the tissues: a rising or lowering thereof is actually compensated by the same second part.

The present invention, moreover, has advantageous technical features; the main ones thereof are summarized hereinafter.

The support may further comprise, in an intermediate area thereof, a third part in the shape of a truncated cone, in contact on a first side with the first part of the support and on a second side with the second part of the support, and the cross-section of which increases from the first side to the second side; the inclination of said third part is larger and can range between a minimum of 1 ° to a maximum of 60° (obviously, the inclination of the third part refers to the side surface of the cone with respect to the axis of said support). Such a third part allows a greater freedom in selecting the cross dimensions of the first part and of the second part; in particular, assuming that the dimensions of the truncated cone of the second part are forced, the third part allows great freedom in selecting the dimension, typically the diameter, of the first part.

The provision of the second part and optionally, of the third part in the transmucosal dental implant allows the interface area between implant support and implant element/stump to be separated from the interface area between gum mucosa and maxilla or mandible bone; in this way, any small build ups of organic material due to the interface between transmucosal dental implant and element/stump occur away from the bone, eliminating the risk of damage to the same bone.

The structure of the transmucosal dental implant may be defined so that the distal base of the second part and the proximal base of the element/stump have the same shapes and dimensions and the proximal base of the second part and the distal base of the third part have the same shapes and dimensions. In this way, the likelihood of organic material build up in these interface areas is greatly reduced.

The height of the second part is typically between 0.8 mm and 3.00 mm, preferably between 0.8 mm and 2.5 mm, more preferably between 1.00 mm and 2.3 mm, and even more preferably between 1.8 mm and 2.00 mm.

The height of the third part is typically between 0.3 mm and 1.0 mm, preferably between 0.4 mm and 0.9 mm, and even more preferably between 0.5 mm and 0.9 mm.

The overall height of the second and third parts is typically between 1.5 mm and 3.0 mm, preferably between 2.0 mm and 2.8 mm, and more preferably between 2.5 mm and 2.8 mm.

The second part 20 and/or the third part 30, located in the mucosa when the implant is applied, may be made of a ceramic material, advantageously zirconium oxide. On the other hand, the first part 10 may be made of a biocompatible metal material. Part 20 and/or 30 and the first part 10 are realized so that no gaps are present between part 20 and/or 30 and the first part 10.

### Brief description of the figures

The present invention shall be described through some preferred embodiments thereof, given by way of a non-limiting example, with reference to the annexed drawings, in which:
Figure 1 shows the section of a transmucosal dental implant according to the invention inserted in the mandible or maxilla bone;
Figure 2 shows the section of a transmucosal dental implant according to the invention in which the dimensions of some parts thereof are shown;
Figure 3 shows a use of a transmucosal dental implant according to the invention to which a dental prosthesis is anchored;
Figure 4 shows the section of two adjacent transmucosal dental implants, both according to the invention, on which a single bridge dental prosthesis is applied;
Figure 5 shows the section of two adjacent transmucosal dental implants, both according to the invention, on which a single bridge dental prosthesis is being applied;
Figure 6 shows the section of a transmucosal dental implant according to the invention in which there is shown a way in which the stump and the remaining parts of the dental implant are coupled to each other;
Figure 7 shows the section of a transmucosal dental implant according to the invention in which deposits and build ups of organic material are shown;
Figure 8 shows the section of a transmucosal dental implant according to the invention according to an alternative embodiment thereof;
Figure 9 shows three different embodiments of a transmucosal dental implant according to the invention;
Figure 10 shows the application of the same embodiment of a transmucosal dental implant according to the invention in three different situations.

Both such a description and such drawings are to be deemed for illustration purpose only and therefore non-limiting; therefore, the present invention may be implemented according to other and different embodiments; moreover, it should be noted that such figures are schematic, simplified and not scaled as is apparent to those skilled in the art.

### Detailed description of the invention

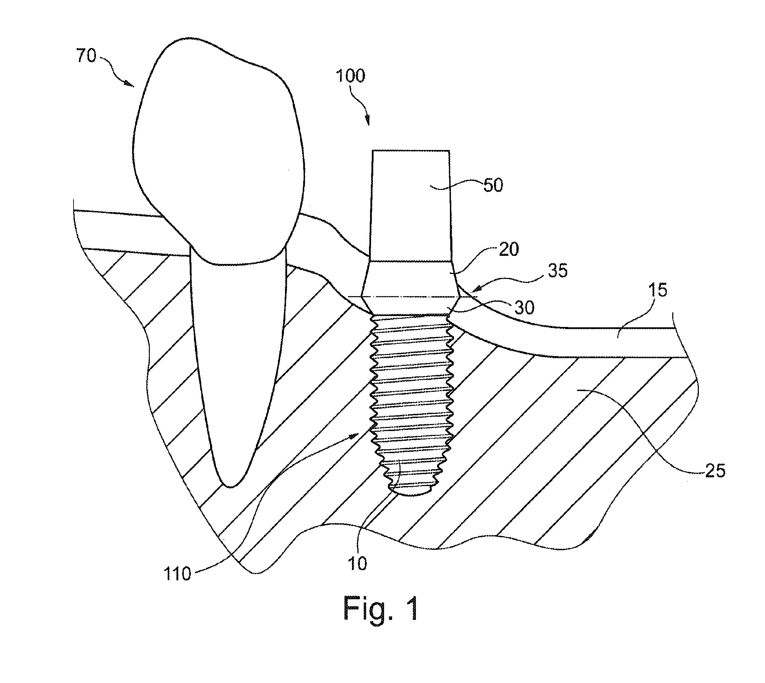

With reference to Figure 1, the transmucosal dental implant essentially consists of a support 100 and a stump 50; support 100 having an elongated shape adapted to be partially inserted in a mandible or maxilla bone 25 and comprising, in a first end area of the support, a first part 10 adapted to be fixed into bone 25. Part 10 has the function of fixing support 100 into the structure of bone 25, it is therefore necessary to have a stable coupling between these two parts. By way of example, this may be obtained by a threading of part 10 which thus forms a screw that is screwed into the structure of bone 25. The example of part 10 in the shape of a screw has to be deemed as non-exhaustive and represents the embodiment chosen in the example shown in the figure; any other fixing means that ensures a stable coupling is suitable for the intended purpose.

As shown in Figure 1, part 10 is wholly or, at the most, "partially" inserted into bone 25; in fact, a minimum part (e.g. 1 or 2 mm) of part 10 can be outside bone 25 and in direct contact with the gum mucosa 15; however, this does not result in a problem.

In one embodiment, the material which forms part 10 is the usual one for endosseous implants, in particular biocompatible material, preferably metal, such as titanium or a titanium alloy, or zirconium or a zirconium alloy, or a titanium-zirconium alloy or ceramic material, such as zirconium oxide. In another embodiment, the materials that make up the implants may also be biocompatible materials of the ceramic type or polymeric type, preferably thermoplastic.single

A third part 30 and then a second part 20 are provided, in a sequence, connected to the first part 10. Both parts 20 and 30 are truncated cones reciprocally upturned. The second part 20 has a cross-section which decreases in the direction of stump 50, while the third part 30 has a cross-section which increases in the direction from the first part 10 to the second part 20, i.e. in the direction of stump 50.

The assembly of second part 20 and third part 30, indicated in the figures as element 35, is functional to create a spatial separation between a stump 50 of the transmucosal dental implant and the first part 10, i.e. the screw; part 35 is placed into the gum mucosa 15 being specifically adapted for this purpose. Advantageously (and as in the case of the examples in the figures), the first part 10 and element 35 are formed in a single piece; advantageously (and as in the case of the example in the figures), the second part 20 and the third part 30 are formed in a single piece; advantageously (and as in the case of the example in the figures), the first part 10, the second part 20 and the third part 30 are formed in a single piece; in this way, any possible material build up at the interfaces between these elements is prevented.

Element 35 may comprise only the second part 20, since part 30 is only used if the base of the second part 20 is too large to be directly connected to the screw. In fact, if the base of part 20 is too large, it is necessary to adjust it to the dimensions of the screw by means of part 30. Therefore, this part 30 is preferably shaped as a truncated cone, with a section which decreases from part 20 in the direction of the screw.

In Figure 1, stump 50 is shaped as a truncated cone with a side wall almost parallel to the cone axis.

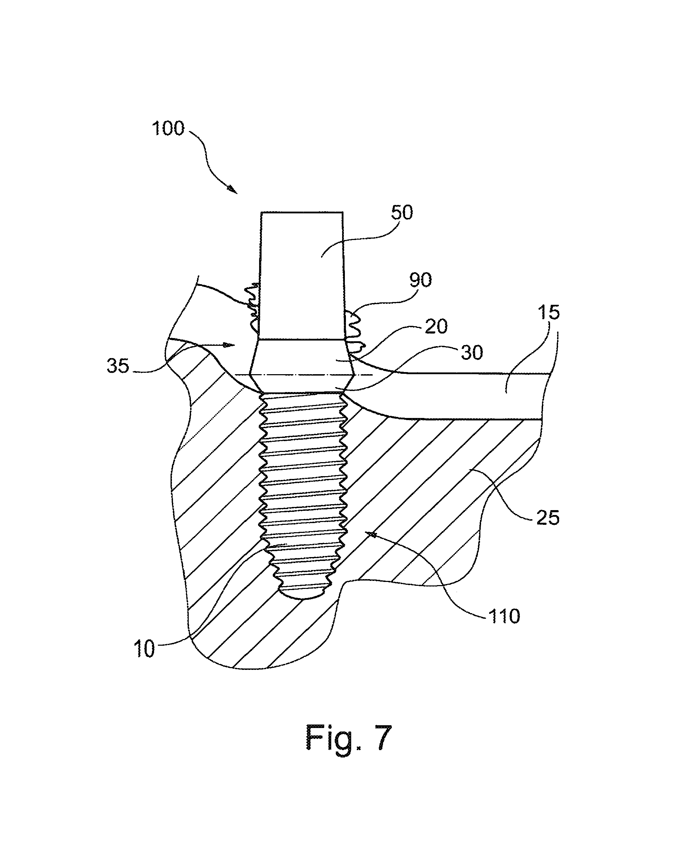

As shown in Figure 7, part 35 which separates screw 10 from stump 50 prevents residues of food or other substances 90 from building up close to the screw and close to the bone.

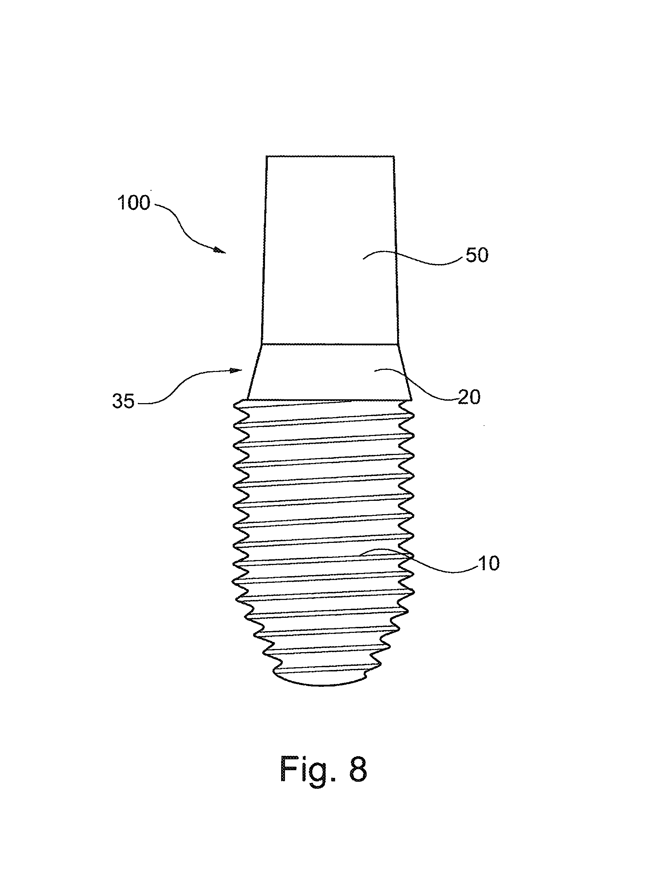

As shown in Figure 8, part 35 may comprise only the second part 20.

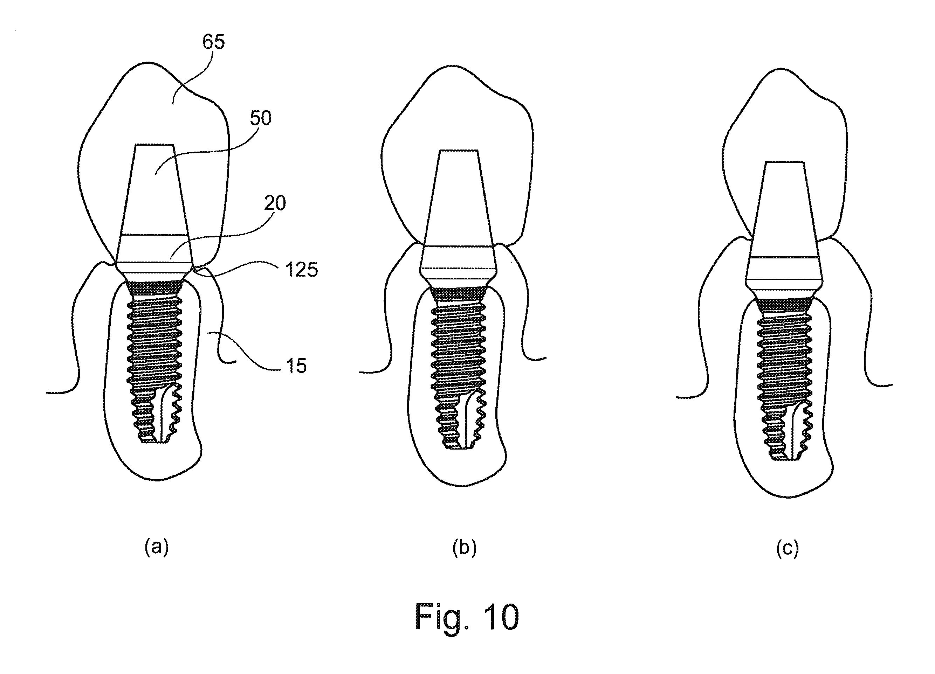

Advantageously, the configuration of part 35 allows the adjustment to different types of thickness and evenness of the mucosa (i.e. to different biotypes, as can be seen in Figure 10) and to different types of bone dimensions (e.g. larger screws can be accommodated in larger bones).

In general, it will be possible to fix a dental prosthesis 65 with a closing margin coinciding with the top limit of mucosa 15; such advantage also results from biotypes with a large thickness of the mucosa; moreover, the physiological adjustments of the tissues subsequent to the application do not impair the prosthetic renewal: neither as regards the aesthetic features thereof nor for the functionality of the operations to carry out to complete the same, as shall clearly appear from the following description.

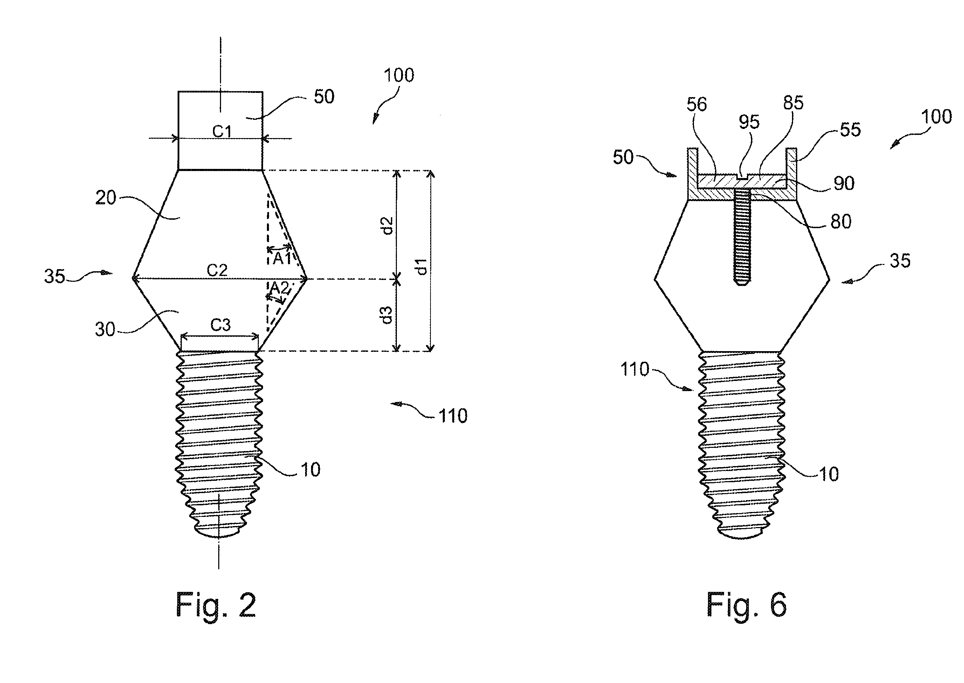

As shown in Figure 2, in this case part 35 comprising the second part 20 and the third part 30 is made with such a height as to obtain the interface between stump 50 and the second part 20 sufficiently separated from the bone ridge (as shown for example in Figure 10) at the outermost part of mucosa 15.

The closing margin of crown 65 is typically located on the second part 20, but it may also be located on stump 50, with no substantial drawback; this depending on the thickness of the mucosa of the individual receiving the implant.

This allows the interface area between stump 50 and the second part 20 to be prevented from being too close to bone 25, thus having the prosthesis closing margin coinciding with the outermost part of the mucosa, advantageously preventing problem of dental prosthesis cementing.

With the aid of Figure 2, typical dimensions of part 35 shall now be indicated. Dimension d1, i.e. the height of part 35, ranges between 1.5 mm and 3.0 mm, preferably between 2.0 mm and 2.8 mm, and more preferably between 2.5 mm and 2.8 mm.

Dimension d2, i.e. the height of the second part 20, is from 0.8 mm to 3.0 mm, preferably from 0.8 mm to 2.5 mm, more preferably from 1.0 mm to 2.3 mm, and even more preferably from 1.8 mm to 2.0 mm. Such a dimension allows the physiological settlements of the tissues upon the application of the implant to be compensated for.

Dimension c1, i.e. the diameter of the proximal base of the second part 20 which coincides with the proximal base of the stump, is in a range of values between 2.9 mm and 6.0 mm and, in the embodiment shown in the figure, it is equal to about 4 mm.

Dimension c2, i.e. the diameter of the distal base of the second part 20 which coincides with the dimension of the proximal base of the third part 30, is in a range of values between 2.9 mm and 7.0 mm and, in the embodiment shown in the figure, it is equal to about 4.8 mm.

Dimension c3, i.e. the diameter of the proximal base of the third part 30 which coincides with the diameter of the first part 10, is in a range of values between 2.5 mm and 7.0 mm and, in the embodiment shown in the figure, it is equal to about 4 mm.

The side wall of the cone of the second part 20 has an inclination with respect to the cone axis corresponding to an angle A1; angle A1 is in a range between 8° and 15°, preferably more than 10° and less than 15°, more preferably more than 10° and less than 12°, even more preferably more than 10° and less than 11 °.

Tests run have shown that the optimal range of angle A1 is between 10.05° and 10.15°; in particular, in the proposed embodiment, an angle equal to 10.1 ° is used. The side wall of the cone of the third part 30 has an inclination with respect to the cone axis corresponding to an angle A2; angle A2 is in a very wide range between 1 ° and 60°; in particular, in the proposed embodiment, an angle equal to 35° is used.

Moreover, the second part 20 and the third part 30 (in the embodiments where the latter is provided) are made of a ceramic material. Such aspect is very advantageous since in case of lowering of the tissues with respect to the originally expected level, the second part 20, which in this way is partially exposed, has the same color as the dental prosthesis 65. A chromatic continuity is thus ensured which prevents a part of the implant from being noticed subsequent to the lowering of the tissues.

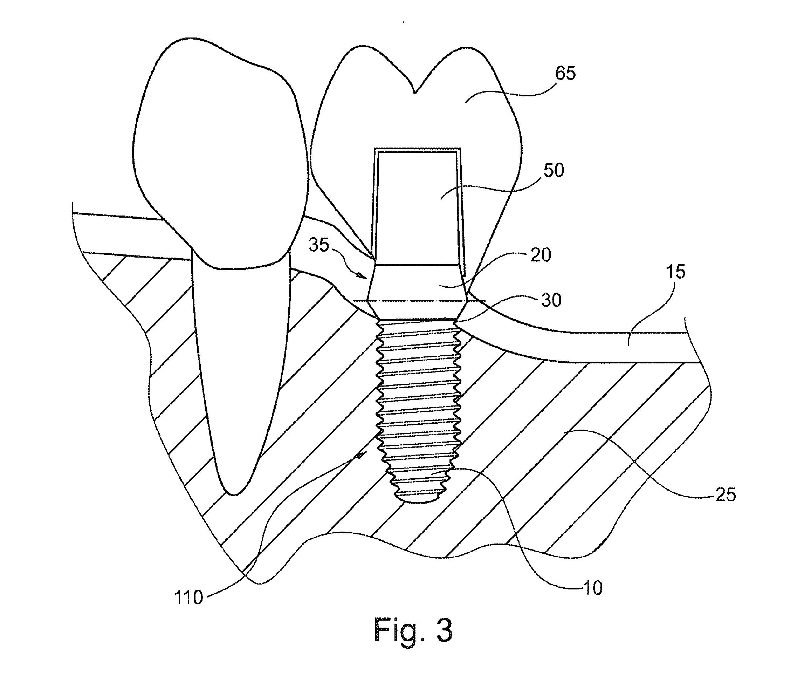

Figure 3 shows an exemplary embodiment where there are provided part 35 in the gum mucosa 15, part 10 adapted to be inserted in the mandible or maxilla bone 25, made by a screw and a stump 50 on which a dental prosthesis 65 is installed, next to a real tooth 70. In the embodiment in the figure, angle A1 has been selected with a dimension equal to 10.1 °, as in the example of Figure 2.

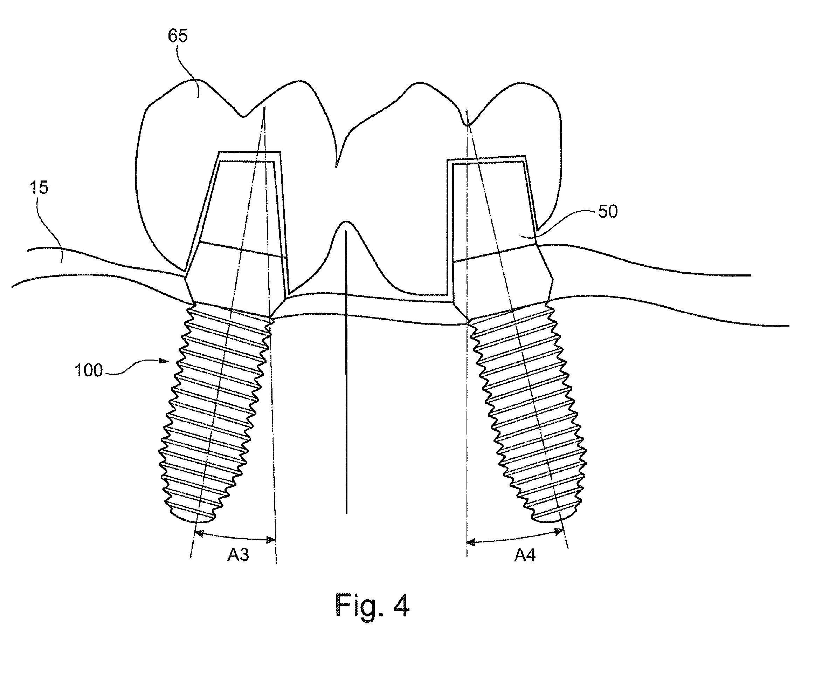

Figure 4 shows an embodiment where two transmucosal dental implants 100 are used and on which a dual dental prosthesis is inserted in a single body 65. In order to allow an easy assembly of the prosthesis on stumps 50, the latter have an inclination that allows a good coupling thereof. In the exemplary embodiment, stumps 50 have an inclination of a little more than 10°.

Again with reference to Figure 4, the two implants 100 are shown with the same inclination as when such implants are anchored into the bone. In fact, such bone is not uniform but has an irregular surface characterized by higher areas, lower areas and more or less inclined areas. Therefore, the two implants 100 of the exemplary embodiment are asymmetric and have a first inclination, having angle A3 and a second inclination, having angle A4; both inclinations are referred to the symmetry axis of the transmucosal dental implants. In this embodiment, the second part 20 is inclined by 10.1 °. In order not to be in an undercut condition, thus being unable to insert a bridge 65 between the second parts 20 underneath stumps 50, the sum of angle A3, inclination of the first implant with respect to the axis thereof, and of angle A4, inclination of the second implant with respect to the axis thereof, must be less than twice angle A1, the inclination of the wall of the second part 20 again referred to the implant axis.

Advantageously, inclination A1 of the wall of the second part 20 allows bridges to be applied on implants having a considerable inclination with respect to the axis thereof (for example due to the shape of the bone in which they are installed). The provision of inclination A1 of the wall of the second part 20 advantageously allows a bridge 65 to be inserted, with projection profile coinciding with the proximal base also in the case of multiple contiguous implants inclined with respect to the axis thereof.

According to the invention, in the exemplary embodiment, the two walls of part 20 of both implants (into the gum mucosa) are inclined by an angle A1 equal to 10.1 °. The fixing of bridge 65 to stumps 50 is ensured by the use cement which ensures a stable coupling.

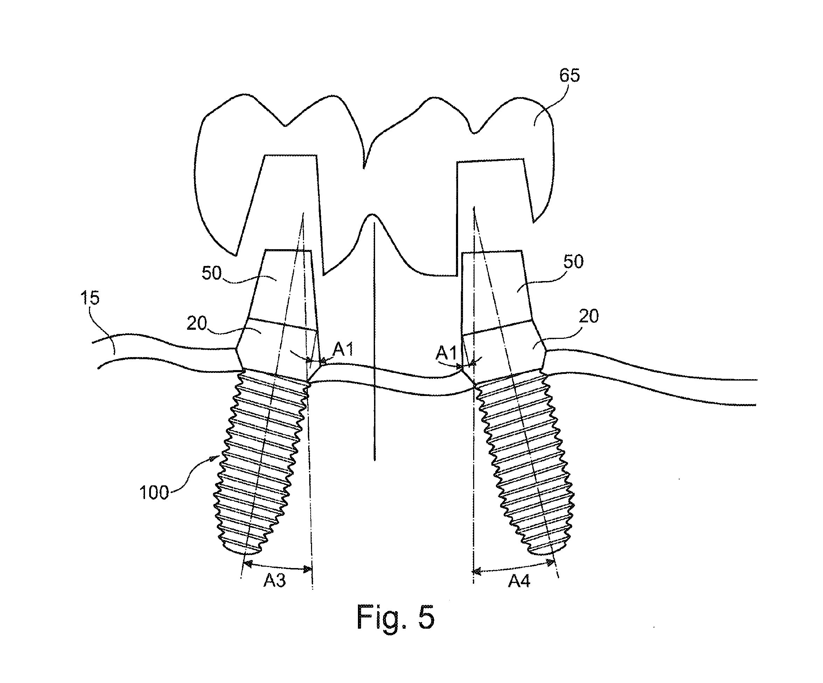

Figure 5 shows the same embodiment of Figure 4 described above, in which bridge 65 is in the step of being inserted on stumps 50. In this figure, it is worth noting the importance of the inclination angles of the second parts 20 (A1) which ensure a good coupling between bridge 65 and stumps 50, if the transmucosal dental implants 100 have an inclination with respect to the axis thereof due to the shape of the bone in which they are installed.

In this embodiment, angle A1 is equal to 10.1° for both implants 100. In order to easily install a bridge 65, stumps 50 are asymmetrically arranged and inclined with respect to the axis of implant 100.

The inclinations of transmucosal dental implants 100 A3 and A4, in the subject embodiment, in the sum are less than twice the value of angle A1. This allows a bridge 65, with projection profile coinciding with the proximal base of part 20, to be easily fixed to stumps 50 by the use of cement.

Overall, therefore, the combination of angles A1 of the walls of the second part 20 and the inclination of stump 50, all referred to the symmetry axis of implants 100, allow undercut situations to be prevented and the projection profile of prosthesis 65 to coincide with the proximal base of the second parts 20.

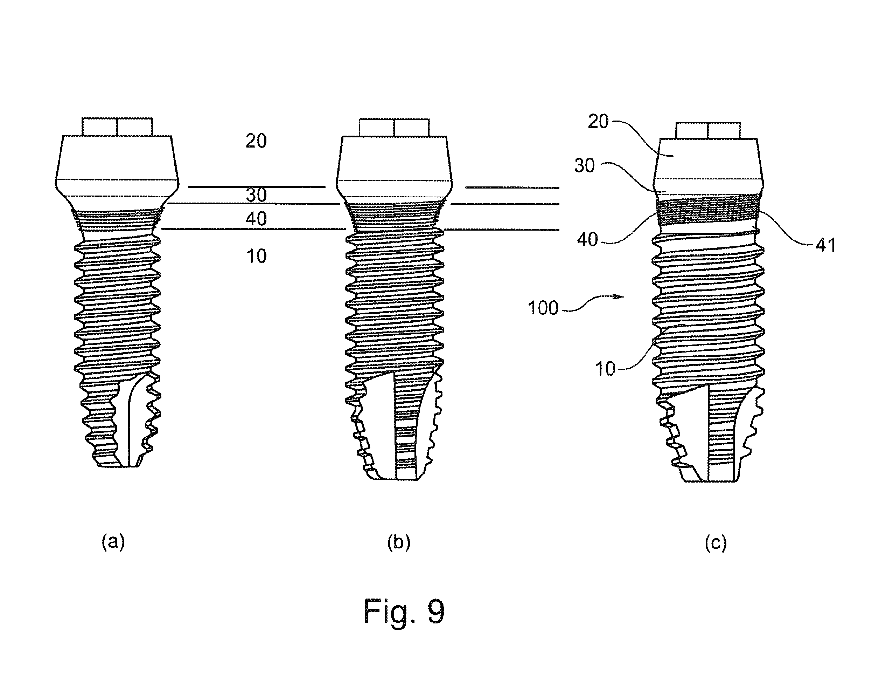

With the aid of Figure 9, three embodiments of the transmucosal dental implant according to the invention can be noted. In particular, three implants 9a 9b e 9c can be seen, with the diameter of screw 10 increasing from embodiment 9a to embodiment 9c.

It is noted that the provision of the third part 30 serves for adjusting the dimension of the distal base of the second part 20 to the diameter of screw 10. In fact, the part specifically designed for being accommodated in mucosa is the second part 20, the third part 30 serves as support so that such condition may occur in all the implants and for all the biotypes to which such implants are applied. As can be seen in particular in Figures 9a and 9b, the third part 30 may be connected by the proximal base thereof to a further joining part 40, inserted in the bone.

Such part 40 therefore couples part 30 to screw 10, is made by means of a truncated cone with section which decreases in the direction of screw 10, with convex side surface.

The surface of part 40 may further comprise a knurl 41. Such knurl is used as a visual reference for modulating the depth at which the transmucosal dental implant is inserted. This is particularly advantageous for the preparation on completion, described above, with which the subject transmucosal dental implants are applied. In Figure 10 three different use conditions of the transmucosal dental implant - 10a, 10b and 10c - can be noted, where the use of the implant is shown in biotypes with a thin mucosa, a normal mucosa and a thick mucosa, respectively. With reference to Figure 10a - biotype with thin mucosa - it is worth noting how the transmucosal dental implant is advantageously applied with the second part 20 partially outside the mucosa surface, in any case with the possibility to apply a prosthesis 65 with projecting profile 125 coinciding with the outermost surface of the mucosa.

With reference to Figure 10b - biotype with normal mucosa - it is worth noting how the transmucosal dental implant is advantageously applied with the second part 20 inserted into mucosa 15, therefore with the possibility to apply a prosthesis 65 with projecting profile 125 coinciding with the outermost surface of the mucosa.

In Figure 10c - biotype with thick mucosa - the second part 20 and a portion of stump 50 are into mucosa 15. Even in this case, a prosthesis 65 with projecting profile 125 coinciding with the outermost surface of the mucosa can be applied, advantageously without undergoing problems of prosthesis cementing.

Figure 6 schematically shows a possible way in which the parts of a transmucosal dental implant according to the present invention are assembled.

In the exemplary embodiment, part 35 and part 10 adapted to fix into the bone are formed in a single piece.

Stump 50 is made by a hollow body 55 having a hole 80 at the center of its base. Stump 50 is fixed to the rest of implant 100 by means of a screw 80.

Such screw 80 comprises a head 85 and a slit 95 to be screwed.

The nut screw, not shown in the figure, in which screw 80 is inserted, is obtained into the structure of part 35 and part 10, formed in a single piece.

Head 85 of screw 80 has dimensions coinciding with the inner base of the hollow body 55 that forms stump 50.

Therefore, through slit 95 of screw 80, the hollow body 55 can be fixed to implant 100.

Cavity 56 provided in the hollow body 55 is sealed, for example by means of silicone, before being filled with cement for fixing the dental prosthesis 65 to stump 50. This is to preserve slit 95 of screw 80, and in any subsequent maintenance, to easily access thereto.

Obviously, the inner structure of the transmucosal dental implant according to the present invention may also be very different from that shown in Figure 6.

The coupling between stump 50 and the second part 20 may advantageously comprise means adapted to prevent the rotation of the stump (and thus of the prosthesis) with respect to the implant (in particular the upper cone); these means may consist, for example, of a hexagonal pyramid or prism projecting or recessed between the implant and the stump.

## Claims

1. Transmucosal dental implant (100) comprising a support (110) adapted to be partially inserted into a maxilla or mandible bone (25) and an element (50) fixed to said support (110) and adapted to receive a dental prosthesis, wherein said support has an elongated form and comprises:
- in a first end area thereof, a first part (10) adapted to be fixed into said bone (25), and
- in a second end area thereof, a second part (20) in the shape of a truncated cone, in contact with said element (50), and the cross-section of which reduces in the direction of said element (50);
wherein said first part (10) is adapted to be inserted into said bone (25),
wherein said second part (20) is adapted to be at least partially placed in an oral mucosa (15),
wherein said second part (20) is inclined by a second angle (A1) between 8° and 15°,
wherein said support (110) is in a single piece.

2. Transmucosal dental implant (100) according to claim 1, wherein said second angle (A1) is more than 10° and less than 15°, preferably more than 10° and less than 12°, more preferably more than 10° and less than 11 °.

3. Transmucosal dental implant (100) according to any of the preceding claims, wherein said element is a stump (50), and wherein the distal base (C1) of said second part (20) and the proximal base (C1) of said stump (50) have the same shape and dimensions.

4. Transmucosal dental implant (100) according to any of the preceding claims, wherein the height of said second part (20) is between 0.8 mm and 3.0 mm, preferably between 0.8 mm and 2.5 mm, more preferably between 1.0 mm and 2.3 mm, even more preferably between 1.8 mm and 2.0 mm.

5. Transmucosal dental implant (100) according to any of the preceding claims, wherein said support (110) further comprises:
- in an intermediate area thereof, a third part (30) in the shape of a truncated cone, in contact on a first side with said first part (10) and on a second side with said second part (20), and the cross-section of which increases from said first side to said second side.

6. Transmucosal dental implant (100) according to claim 5, wherein said third part (30) is inclined by a third angle (A2) between 1 ° and 60°.

7. Transmucosal dental implant (100) according to claim 5 or 6, wherein the proximal base (C2) of said second part (20) and the distal base (C2) of said third part (30) have the same shape and dimensions.

8. Transmucosal dental implant (100) according to any of the claims from 5 to 7, wherein the height of said third part (30) is between 0.3 mm and 1.0 mm, preferably between 0.4 mm and 0.9 mm, more preferably between 0.5 mm and 0.9 mm.

9. Transmucosal dental implant (100) according to any of the claims from 5 to 8, wherein the overall height of said second part (20) and of said third part (30) is between 1.5 mm and 3.0 mm, preferably between 2.0 mm and 2.8 mm, more preferably between 2.5 mm and 2.8 mm.

10. The dental implant (100) according to any of the preceding claims from 1 to 9, wherein said second part (20) and/or said third part (30) is made of ceramic material and wherein said first part (10) is made of metallic material.

## Patentansprüche

1. Transmukosales Zahnimplantat (100), das einen Träger (110), der dafür ausgelegt ist, teilweise in einen Oberkieferknochen oder in einen Unterkieferknochen (25) eingeführt zu werden, und ein Element (50), das an dem genannten Träger (110) befestigt ist und dafür ausgelegt ist, eine Zahnprothese aufzunehmen, umfasst, wobei der genannte Träger eine langgestreckte Form aufweist und Folgendes umfasst:
- in einem ersten Endbereich davon ein erstes Teil (10), das dafür ausgelegt ist, an dem genannten Knochen (25) befestigt zu werden, und
- in einem zweiten Endbereich davon ein zweites Teil (20) in Form eines Kegelstumpfs in Kontakt mit dem genannten Element (50) und wobei sein Querschnitt in Richtung des genannten Elements (50) abnimmt;
wobei das genannte erste Teil (10) dafür ausgelegt ist, in den genannten Knochen (25) eingeführt zu werden,
wobei das genannte zweite Teil (20) dafür ausgelegt ist, wenigstens teilweise in einer Mundschleimhaut (15) angeordnet zu werden,
wobei das genannte zweite Teil (20) um einen zweiten Winkel (A1) zwischen 8° und 15° geneigt ist,
wobei der genannte Träger (110) in einem einzigen Teil ist.

2. Transmukosales Zahnimplantat (100) gemäß Anspruch 1, wobei der genannte zweite Winkel (A1) größer als 10° und kleiner als 15°, vorzugsweise größer als 10° und kleiner als 12°, bevorzugter größer als 10° und kleiner als 11°, ist.

3. Transmukosales Zahnimplantat (100) gemäß einem der vorhergehenden Ansprüche, wobei das genannte Element ein Stumpf (50) ist und wobei die distale Basis (C1) des genannten zweiten Teils (20) und die proximale Basis (C1) des genannten Stumpfs (50) dieselbe Form und dieselben Dimensionen aufweisen.

4. Transmukosales Zahnimplantat (100) gemäß einem der vorhergehenden Ansprüche, wobei die Höhe des genannten zweiten Teils (20) zwischen 0,8 mm und 3,0 mm, vorzugsweise zwischen 0,8 mm und 2,5 mm, bevorzugter zwischen 1,0 mm und 2,3 mm, noch bevorzugter zwischen 1,8 mm und 2,0 mm, beträgt.

5. Transmukosales Zahnimplantat (100) gemäß einem der vorhergehenden Ansprüche, wobei der genannte Träger (110) ferner umfasst:
- in einem Zwischenbereich davon ein drittes Teil (30) in Kegelstumpfform in Kontakt auf einer ersten Seite mit dem genannten ersten Teil (10) und auf einer zweiten Seite mit dem genannten zweiten Teil (20) und wobei sein Querschnitt von der genannten ersten Seite zu der genannten zweiten Seite zunimmt.

6. Transmukosales Zahnimplantat (100) gemäß Anspruch 5, wobei das genannte dritte Teil (30) um einen dritten Winkel (A2) zwischen 1° und 60° geneigt ist.

7. Transmukosales Zahnimplantat (100) gemäß Anspruch 5 oder 6, wobei die proximale Basis (C2) des genannten zweiten Teils (20) und die distale Basis (C2) des genannten dritten Teils (30) dieselbe Form und dieselben Dimensionen aufweisen.

8. Transmukosales Zahnimplantat (100) gemäß einem der Ansprüche 5 bis 7, wobei die Höhe des genannten dritten Teils (30) zwischen 0,3 mm und 1,0 mm, vorzugsweise zwischen 0,4 mm und 0,9 mm, bevorzugter zwischen 0,5 mm und 0,9 mm, beträgt.

9. Transmukosales Zahnimplantat (100) gemäß einem der Ansprüche 5 bis 8, wobei die Gesamthöhe des genannten zweiten Teils (20) und des genannten dritten Teils (30) zwischen 1,5 mm und 3,0 mm, vorzugsweise zwischen 2,0 mm und 2,8 mm, bevorzugter zwischen 2,5 mm und 2,8 mm, beträgt.

10. Zahnimplantat (100) gemäß einem der vorhergehenden Ansprüche 1 bis 9, wobei das genannte zweite Teil (20) und/oder das genannte dritte Teil (30) aus einem Keramikmaterial hergestellt ist und wobei das genannte erste Teil (10) aus einem Metallmaterial hergestellt ist.

## Revendications

1. Implant dentaire transmuqueux (100) comprenant un support (110) conçu pour être partiellement inséré dans un os (25) du maxillaire ou de la mandibule et un élément (50) fixé audit support (110) et conçu pour recevoir une prothèse dentaire, dans lequel ledit support possède une forme allongée et comprend :
- dans une première zone terminale de celui-ci, une première partie (10) conçue pour être fixée audit os (25), et
- dans une seconde zone terminale de celui-ci, une deuxième partie (20) sous la forme d'un cône tronqué, en contact avec ledit élément (50) et dont la section transversale se réduit dans la direction dudit élément (50) ;
dans lequel ladite première partie (10) est conçue pour être insérée dans ledit os (25),
dans laquelle ladite deuxième partie (20) est conçue pour être partiellement placée dans une muqueuse buccale (15),
dans lequel ladite deuxième partie (20) est inclinée selon un deuxième angle (A1) entre 8° et 15°,
dans lequel ledit support (110) est en une seule pièce.

2. Implant dentaire transmuqueux (100) selon la revendication 1, dans lequel ledit deuxième angle (A1) est supérieur à 10° et inférieur à 15°, de préférence supérieur à 10° et inférieur à 12°, et de manière davantage préférée supérieur à 10° et inférieur à 11°.

3. Implant dentaire transmuqueux (100) selon l'une quelconque des revendications précédentes, dans lequel ledit élément est un ancrage (50), et dans lequel la base distale (C1) de ladite deuxième partie (20) et la masse proximale (C1) dudit ancrage (50) ont la même forme et les mêmes dimensions.

4. Implant dentaire transmuqueux (100) selon l'une quelconque des revendications précédentes, dans lequel la hauteur de ladite deuxième partie (20) est entre 0,8 mm et 3,0 mm, de préférence entre 0,8 mm et 2,5 mm, de manière davantage préférée entre 1,0 mm et 2,3 mm, ou mieux entre 1,8 mm et 2,0 mm.

5. Implant dentaire transmuqueux (100) selon l'une quelconque des revendications précédentes, dans lequel ledit support (110) comprend en outre :
- une zone intermédiaire de celui-ci, une troisième partie (30) sous la forme d'un cône tronqué, en contact sur un premier côté avec ladite première partie (10) et sur un second côté avec ladite deuxième partie (20), et dont la section transversale augmente à partir du premier côté vers le second côté.

6. Implant dentaire transmuqueux (100) selon la revendication 5, dans lequel ladite troisième partie (30) est inclinée selon un troisième angle (A2) entre 1° et 60°.

7. Implant dentaire transmuqueux (100) selon la revendication 5 ou 6, dans lequel la base proximale (C2) de ladite deuxième partie (20) et la base distale (C2) de ladite troisième partie (30) ont la même forme et les mêmes dimensions.

8. Implant dentaire transmuqueux (100) selon l'une quelconque des revendications 5 à 7, dans lequel la hauteur de ladite troisième partie (30) est entre 0,3 mm et 1,0 mm, de préférence entre 0,4 mm et 0,9 mm, et de manière davantage préférée entre 0,5 mm et 0,9 mm.

9. Implant dentaire transmuqueux (100) selon l'une quelconque des revendications 5 à 8, dans lequel la hauteur globale de ladite deuxième partie (20) et de ladite troisième partie (30) est entre 1,5 mm et 3,0 mm, de préférence entre 2,0 mm et 2,8 mm, et de manière davantage préférée entre 2,5 mm et 2,8 mm.

10. Implant dentaire transmuqueux (100) selon l'une quelconque des revendications 1 à 9, dans lequel ladite seconde partie (20) et/ou ladite troisième partie (30) sont faites d'un matériau céramique et dans lequel ladite première partie (10) est faite d'un matériau métallique.
